# EUROPEAN PATENT APPLICATION

(11) **EP 4 685 694 A2**
(43) Date of publication of application: **28.01.2026**
(21) Application number: 24775272.8
(22) Date of filing: 21.03.2024
(51) Int. Cl.: G06K 19/077, B32B 15/01

(54) **CONTACTLESS-TYPE METAL CARD AND MANUFACTURING METHOD THEREFOR**

(30) Priority: 22.03.2023 KR 20230037263
(71) Applicant: N Able Co., Ltd., Paju-si Gyeonggi-do 10904 (KR)
(72) Inventor: KWON, Sung Yong, Namyangju-si, Gyeonggi-do 12046 (KR); KIM, Jin Hwa, Paju-si, Gyeonggi-do 10906 (KR)
(74) Representative: Gulde & Partner
(86) International application number: PCT/KR2024/095597
(87) International publication number: WO 2024/196227

(57) **Abstract**

The present disclosure relates to a metal card for implementing RF capability by applying a COM chip module, the metal card comprising: an antenna for transmitting/receiving information to/from the outside; a metal body for providing a space, an opening part, and a slit part, the space being for receiving the antenna, the opening part being insert molding-processed using a synthetic resin so as to receive a portion of a COM chip module, and the slit part being formed starting from the opening part and up to the end of the metal card; a rear sheet manufactured into a shape corresponding to the metal body so as to be lamination-coupled to the rear surface of the metal body; and a front sheet corresponding to the rear sheet and lamination-coupled to the front surface of the metal body, wherein the metal body, the rear sheet, and the front sheet are each coupled by being laminated, and after chamfered, a pocket-milled part is formed in the front sheet so as to correspond to the shape of the COM chip module, and the COM chip module is coupled to the pocket-milled part.

## Description

### [Technical Field]

The present disclosure relates to a metal card for performing payment and a manufacturing method therefor, and more particularly, to a contactless-type metal card performing payment in a contactless manner and improving durability, and a manufacturing method therefor.

### [Background Art]

In general, cards are classified into magnetic cards using a magnetic strip, smart cards using an IC chip, and combination cards thereof according to a recording method, and the smart cards are classified into contact and contactless manners according to the reading method, and contactless types are further classified into proximity communication (NFC) cards that can be read only at a distance of several to several tens of centimeters and RF cards that can be read from a longer distance. Typically, these methods are often provided in duplicate.

Meanwhile, with the spread of contactless payment terminal infrastructure, offline payment methods using smart cards are moving to contactless cards. Previously, hybrid cards in which a contact COB and a contactless chip are included in one card are mainly used. However, contactless chips have small memory capacity and are used only in limited ways for transportation card functions.

When using a combi chip, it is possible to load the international standards for contactless credit cards, so the contact and contactless payments may be performed with a single chip. The contactless payment standards include Visa's "Visa Tap to Pay", MasterCard's "Just Tap & Go", American Express's "American Express Contactless", UnionPay's "QuickPass", and JCB's "JCB contactless".

There are various technologies for a contact connection method between a combi COB and a coil antenna, but there have been issues with durability and durability against external stress.

Accordingly, coil on module (COM) package technology that configures an antenna coil on the COB has emerged, and it has become possible to perform a contactless payment function without a physical contact connection between the chip and the coil antenna, thereby solving the durability limitations of the physical contact method.

However, in applying the contactless COM, the coil antenna design technology is required to maintain the RF stability of the existing contact method.

The structure in which the antenna and the COB-based physical contact of the conventional technology are configured has a high possibility of defects such as chip damage or antenna contacts falling off due to impact when punching to the size of the card after the final assembly when the process is performed at a sheet level. In this case, it is difficult to reuse the metal body, chip, and antenna in the event of a defect, which increases the manufacturing cost.

### [Related Art Document]

### [Patent Document]

### (Patent Document 001) Korean Patent Publication No. 10-1754985

### [Technical Problem]

Therefore, the present disclosure provides a contactless-type metal card that fundamentally blocks a possibility of chip damage during a manufacturing process since a COM chip assembly process is performed in a last process, and a manufacturing method therefor.

Another object of the present disclosure provides a contactless-type metal card capable of reducing a possibility of chip detachment due to external stress by having the same card layer structure, and a manufacturing method therefor.

However, technical problems to be achieved by the present disclosure are not limited to the above-described objects. That is, other objects that are not mentioned may be obviously understood by those skilled in the art to which the present disclosure pertains from the following description.

### [Technical Solution]

In one general aspect, a metal card for implementing RF capability by applying a COM chip module includes: an antenna transmitting/receiving information to/from an outside; a metal body providing a space, an opening part, and a slit part, the space being for receiving the antenna, the opening part being insert molding-processed using a synthetic resin so as to receive a portion of the COM chip module, and the slit part being formed starting from the opening part and up to an end of the metal card; a rear sheet manufactured into a shape corresponding to the metal body so as to be lamination-coupled to a rear surface of the metal body; and a front sheet corresponding to the rear sheet and lamination-coupled to a front surface of the metal body, in which the metal body, the rear sheet, and the front sheet are each coupled by being laminated, and after chamfered, a pocket-milled part is formed on the front sheet so as to correspond to a shape of the COM chip module, and the COM chip module is coupled to the pocket-milled part.

The metal body may include: a body frame forming an appearance; a milling part formed on a portion of the body frame to receive the antenna; and an opening part insert molding-processed with synthetic resin or filled with a prosthesis made of synthetic resin so that a portion of the COM chip module is coupled to a portion of the milling part, and, the slit part may be formed up to the end of the body frame through the opening part and the milling part.

The pocket-milled part may be included in the opening part and formed to correspond to a shape of a portion of the COM chip module so that the pocket-milled part is coupled to the COM chip module.

The COM chip module may include: a chip molding part where the COM chip is molded and coupled; and a lead frame part coupled to the pocket-milled part of the front sheet and the opening part while supporting the chip molding part from below.

The pocket-milled part may be included in the front sheet and formed to correspond to a lead frame part and a chip molding part of the COM chip module so that the pocket-milled part is coupled to the COM chip module.

The antenna may include: a primary coil part primarily receiving current through magnetic induction with the COM chip module; a secondary coil part extending from the primary coil to form a closed-loop coil pattern; and a capacitance pattern part formed of an upper pattern and a lower pattern that are configured in parallel at both ends of the primary coil part and the secondary coil part.

The rear sheet may be laminated with a rear printing sheet, an overlay film, and an MS tape film layer.

The front sheet may be laminated with a front printing sheet and an overlay film layer.

The metal card may further include: a metal sheet in which the metal body is formed in plurality; a rear sheet paper manufactured into the shape corresponding to the metal sheet so as to be lamination-coupled to a rear surface of the metal sheet; and a front sheet paper corresponding to the rear sheet paper and lamination-coupled to the front surface of the metal sheet, in which the metal sheet may be punched and separated into individual metal bodies, and the pocket-milled part may be formed in the metal body, and the COM chip module is coupled to the pocket-milled part.

In another general aspect, there is provided a method for manufacturing a contactless-type metal card, in which, in order to implement RF capability by applying the COM chip module, the contactless-type metal card includes: an antenna transmitting/receiving information to/from an outside; a metal body providing a space, an opening part, and a slit part, the space being for receiving the antenna, the opening part being insert molding-processed using a synthetic resin so as to receive a portion of the COM chip module, and the slit part being formed starting from the opening part and up to an end of the metal card; a rear sheet manufactured into a shape corresponding to the metal body so as to be lamination-coupled to a rear surface of the metal body; and a front sheet corresponding to the rear sheet and lamination-coupled to a front surface of the metal body, the metal body, the rear sheet, and the front sheet being each coupled by being laminated, and after chamfered, a pocket-milled part being formed on the front sheet so as to correspond to a shape of the COM chip module, and the COM chip module being coupled to the pocket-milled part, and the metal body includes: a body frame forming an appearance; a milling part formed on a portion of the body frame to receive the antenna; and an opening part insert molding-processed with synthetic resin or filled with a prosthesis made of synthetic resin so that a portion of the COM chip module is coupled to a portion of the milling part, in which the slit part is formed up to the end of the body frame through the opening part and the milling part, and the pocket-milled part is included in the opening part and formed to correspond to a shape of a portion of the COM chip module so that the pocket-milled part is coupled to the COM chip module, the method including: manufacturing a metal body; laminating the rear sheet on the rear surface of the metal body after manufacturing the metal body; laminating the front sheet on the front surface of the metal body after laminating the rear sheet; laminating the metal body on which the rear sheet and the front sheet are laminated after laminating the front sheet; chamfering the metal card after the laminating; forming the pocket-milled part on the metal card after undergoing the chamfering; and coupling the COM chip module corresponding to the pocket-milled part after forming the pocket-milled part.

The method may further include: manufacturing a metal sheet in which the metal body is formed in plurality; manufacturing a rear sheet paper corresponding to the metal sheet after manufacturing the metal sheet and laminating the rear sheet paper on the rear surface of the metal sheet; manufacturing a front sheet paper corresponding to the rear sheet paper after laminating the rear sheet paper and laminating the front sheet paper on the front surface of the metal sheet; laminating the metal sheet on which the rear sheet paper and the front sheet paper are laminated after laminating the front sheet paper; separating the metal sheet by punching the metal sheet into individual sheets after undergoing the laminating; chamfering the metal card after punching the metal sheet; forming the pocket-milled part on the metal card after undergoing the chamfering; and coupling the COM chip module corresponding to the pocket-milled part after forming the pocket-milled part.

### [Advantageous Effects]

According to an embodiment of the present disclosure, since the COM chip is assembled in the final process after laminating the metal body, the rear sheet, and the front sheet, it is possible to completely eliminate the possibility of chip breakage during the process.

In addition, since it is the contactless method without the physical contact between the antenna and the COM chip, it is possible to fundamentally block the possibility of progressive RF defects.

In addition, since the entire COM chip area adheres to the insert molding part, it is possible to dramatically improve the possibility of separating the COM chip due to external stress.

In addition, since the pocket milling is performed using the existing plastic contact card equipment, there is no need to invest in separate additional equipment, so it is possible to save the time and cost.

However, effects which can be achieved by the present disclosure are not limited to the above-described effects. That is, other effects that are not described may be obviously understood by those skilled in the art to which the present disclosure pertains from the following description.

### [BRIEF DESCRIPTION OF THE DRAWINGS]

The following drawings attached to this specification illustrate preferred embodiments of the present disclosure, and serve to further understand the technical idea of the present disclosure together with the detailed description of the invention described below, so the present disclosure should not be interpreted as being limited to matters described in such drawings.
FIG. 1 is an exploded perspective view of components of a contactless-type metal card according to an embodiment of the present disclosure.
FIG. 2 is a cross-sectional view of the components of the contactless-type metal card.
FIG. 3 is a diagram illustrating a process of (a) laminating, (b) pocket milling, and (c) implanting a COM chip in the contactless-type metal card, respectively.
FIG. 4 is a conceptual diagram illustrating a structure of an antenna.
FIG. 5 is a diagram illustrating a metal sheet on which a plurality of metal bodies are formed.
FIG. 6 is a diagram illustrating a state in which rear sheet paper and front sheet paper are lamination-coupled to the metal sheet.
FIG. 7 is a flowchart illustrating a method for manufacturing a contactless-type metal card according to an embodiment of the present disclosure.
FIG. 8 is a flowchart illustrating the method for mass-producing a contactless-type metal card according to an embodiment of the present disclosure.

### [Best Mode]

Hereinafter, embodiments of the present disclosure will be described in detail with reference to the accompanying drawings so that those skilled in the art may easily practice the present disclosure. However, description of the present disclosure is only an embodiment for structural or functional description, and therefore the scope of the present disclosure should not be construed as limited to embodiments described in the text. That is, since the embodiments may be variously modified and may have various forms, the scope of the present disclosure should be construed as including equivalents capable of realizing the technical idea. In addition, a specific embodiment is not construed as including all the objects or effects presented in the present disclosure or only the effects, and therefore the scope of the present disclosure should not be understood as being limited thereto.

The meaning of the terms described in the present application should be understood as follows.

Terms such as "first" and "second" are intended to distinguish one component from another component, and the scope of the present disclosure should not be limited by these terms. For example, a first component may be named a second component and the second component may also be similarly named the first component. It is to be understood that when one element is referred to as being "connected to" another element, it may be connected directly to or coupled directly to another element or be connected to another element, having the other element intervening therebetween. On the other hand, it is to be understood that when one element is referred to as being "connected directly to" another element, it may be connected to or coupled to another element without the other element intervening therebetween. Meanwhile, other expressions describing a relationship between components, that is, "between", "directly between", "neighboring to", "directly neighboring to" and the like, should be similarly interpreted.

It should be understood that the singular expression include the plural expression unless the context clearly indicates otherwise, and it will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

Unless defined otherwise, all the terms used herein including technical and scientific terms have the same meaning as meanings generally understood by those skilled in the art to which the present disclosure pertains. It should be understood that the terms defined by the dictionary are identical with the meanings within the context of the related art, and they should not be ideally or excessively formally defined unless the context clearly dictates otherwise.

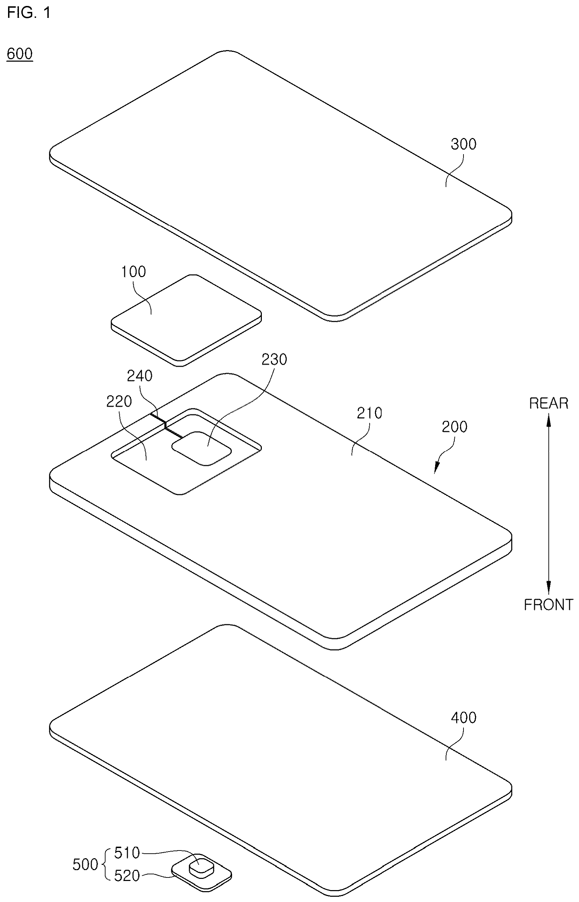

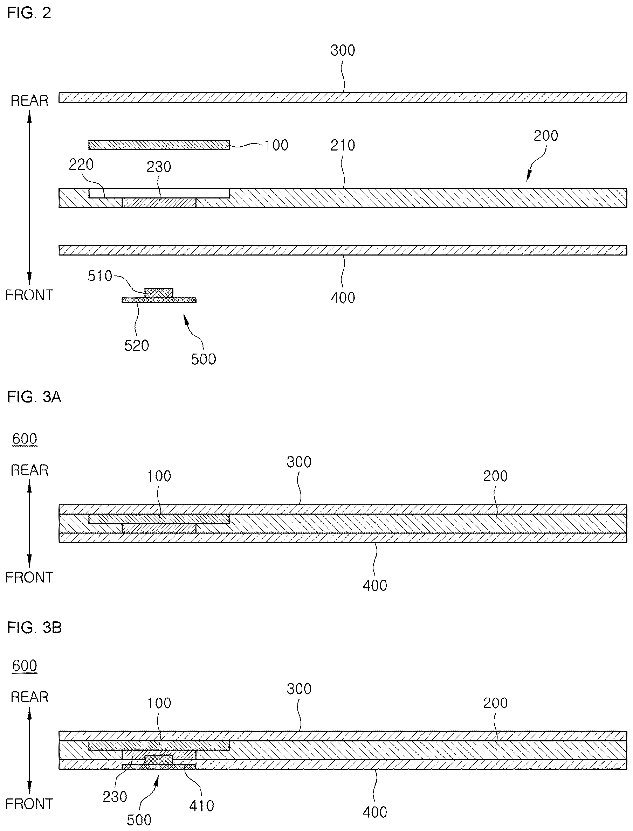

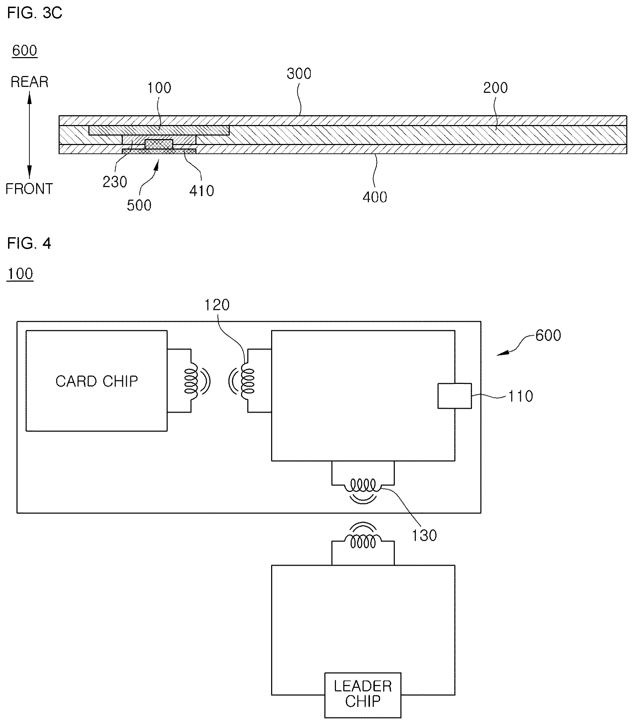

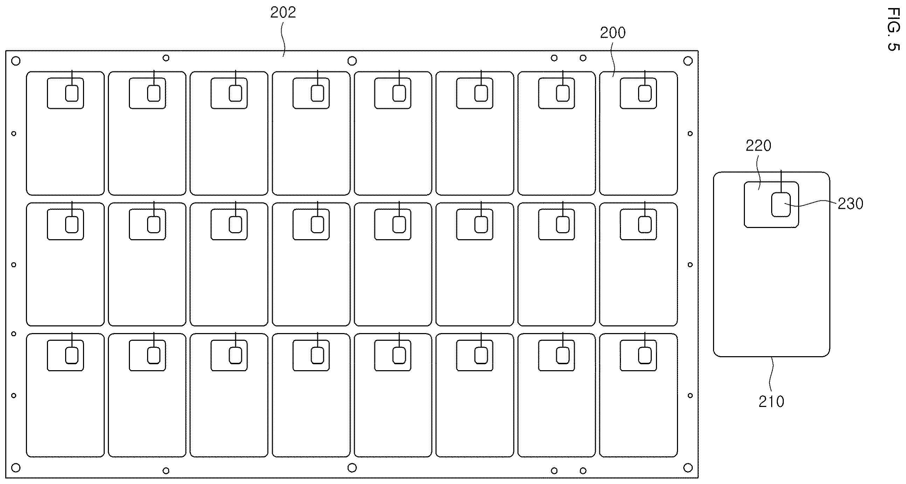

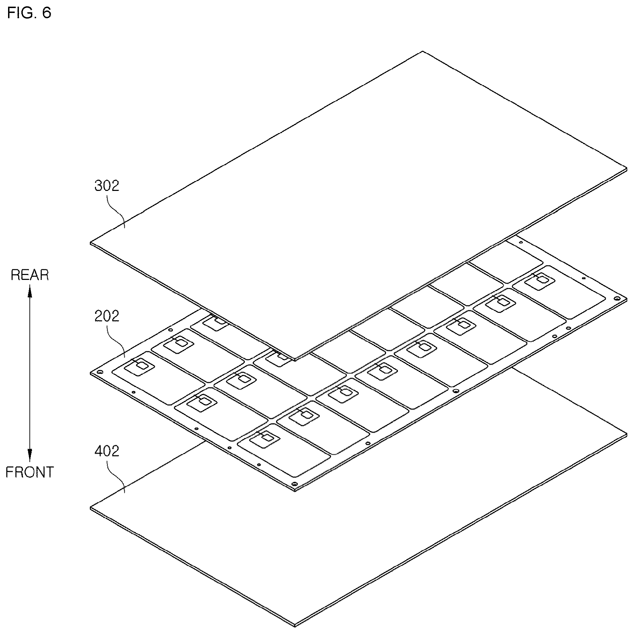

FIG. 1 is an exploded perspective view of components of a contactless-type metal card according to an embodiment of the present disclosure, FIG. 2 is a cross-sectional view of the components of the contactless-type metal card, FIG. 3 is a diagram illustrating a process of (a) laminating, (b) pocket milling, and (c) implanting a COM chip in the contactless-type metal card, respectively, FIG. 4 is a conceptual diagram illustrating a structure of an antenna, FIG. 5 is a diagram illustrating a metal sheet on which a plurality of metal bodies are formed, and FIG. 6 is a diagram illustrating a state in which rear sheet paper and front sheet paper are lamination-coupled to the metal sheet.

As illustrated in FIGS. 1 to 6, the present disclosure is as a metal card implementing RF capability by applying a COM chip and may include an antenna 100, a metal body 200, a rear sheet 300, a front sheet 400, and a COM chip module 500.

Here, the COM chip is a hardware platform for embedded system development, and is designed to enable system developers to easily connect various hardware and software components and simplify a complex system development process. RF, an abbreviation for radio frequency, is a technology that uses electromagnetic waves to transmit and receive data wirelessly in a high-frequency range (3 kHz to 300 GHz), and provides functions such as highspeed data transmission, long-distance communication, and multiple access.

The antenna 100 may transmit/receive information to/from the outside. The antenna 100 is composed of an FPCB and forms a loop structure of an upper pattern 140 and a lower pattern 150, and may include a primary coil part 110 that primarily receives current through magnetic induction with a COM chip module 500, a secondary coil part 120 that extends from the primary coil part 110 to form a closed-loop coil pattern, and a capacitance pattern part 130 that is composed of the upper pattern 140 and the lower pattern 150 of the FPCB for resonance frequency tuning that is configured in parallel at both ends of the primary coil part 110 and the secondary coil part 120.

Specifically, unlike the conventional wire antennas, the FPCB antenna is made by etching the antenna circuit on a flexible circuit board, thereby reducing the size of the antenna 100, simplifying the installation and assembly process, reducing power consumption, etc., and the FPCB antenna may guarantee stable performance even in a high-frequency bandwidth.

The capacitance pattern part 110 may tune a resonant frequency. Specifically, the capacitance is a physical quantity that represents a proportional relationship between the amount of electrically accumulated charge and the voltage difference, and represents the electrical ability existing between two electrolytes.

The metal body 200 may provide a space where the antenna 100 is received, an opening part 230 that is insert molded-processed with synthetic resin so that a portion of the COM chip module 500 is received, and a slit part 240 formed starting from the opening part 230 up to an end of the metal card. That is, the metal body 200 may include a body frame 210, a milling part 220, and an opening part 230. The body frame 210 may form an appearance. The milling part 220 may be formed on a portion of the body frame 210 to receive the antenna 100.

Specifically, milling is to cut a surface of a workpiece using a rotating cutting tool, and is a method of creating a shape by cutting the surface of the workpiece using a rotating body (tool) that rotates at high speed. The milling may create workpieces of various shapes by using various types of cutting tools, rotation speeds, automatic control technology, etc. The milling operation is automatically performed using a computer numerical control (CNC) technology, and may be mainly used for metal processing, wood processing, plastic processing, etc.

The opening part 230 is formed in an open state so that a portion of the COM chip module 500 may be coupled to a portion of the milling part 220, and may be insert molded-processed using a synthetic resin material or filled with a prosthesis made of a synthetic resin material. The open portion of the opening part 230 may be filled with a synthetic resin so that a portion of the COM chip module 500 may be coupled to a portion of the milling part 220.

The slit part 240 may be formed through the opening part 230 and the milling part 220 up to the end of the body frame 210.

The rear sheet 300 is manufactured in a shape corresponding to the metal body 200 and may be laminated-coupled to the rear surface of the metal body 200. The rear sheet 300 may be laminated with a rear printing sheet, an overlay film, and an MS tape film layer.

The front sheet 400 corresponds to the rear sheet 300 and may be laminated-coupled to the front surface of the metal body 200. The front sheet 400 may be laminated with a front printing sheet and an overlay film layer.

Specifically, the materials for the rear sheet 300 and the front sheet 400 may be manufactured using a synthetic resin having excellent durability and elasticity. Types of the synthetic resin include phenol resin, polyurethane resin, polyamide resin, acrylic resin, urea/melamine resin, silicone resin, etc.

In addition, the rear sheet 300 including the M/S tape may be assembled to the rear surface of the metal body 200, and a front sheet 400 may be assembled to the front surface.

The metal body 200, the rear sheet 300, and the front sheet 400 may be laminated and coupled, respectively, and after chamfered, a pocket-milled part 410 may be formed on the front sheet 400 to correspond to the shape of the COM chip module 500. The COM chip module 500 may be coupled to the pocket-milled part 410.

The pocket-milled part 410 may be included in the opening part 230 and formed to correspond to the shape of a portion of the COM chip module 500 so that the COM chip module 500 may be coupled.

The laminating is performed under high temperature and high pressure conditions using a laminating machine such as a hot press, and the machine may laminate two or more layers, compress and laminate the layers, increase durability, waterproof and dustproof the surface, and maintain the gloss of the surface.

The COM chip module 500 may include a chip molding part 510 and a lead frame part 520. The chip molding part 510 may be coupled to a COM chip by molding. The lead frame part 520 may be coupled to the pocket-milled part 410 of the front sheet 400 and the opening part 230 while supporting the chip molding part 510 from below. The pocket-milled part 410 is included in the front sheet 400 and may be formed to be coupled to the COM chip module 500 to correspond to the lead frame part 520 and the chip molding part 510 of the COM chip module 500.

The contactless-type metal card according to an embodiment of the present disclosure may include a metal sheet 202, a rear sheet paper 302, and a front sheet paper 402. The metal sheet 202 may be formed of a plurality of metal bodies 200. The rear sheet paper 302 may be manufactured in a shape corresponding to the metal sheet 202 and may be lamination-coupled to the rear surface of the metal sheet 202. The front sheet paper 402 corresponds to the rear sheet paper 302 and may be lamination-coupled to the front surface of the metal sheet 202. The metal sheet 202 may be punched and separated into individual metal bodies 200. The pocket-milled part 410 may be formed in the metal body 200, and the COM chip module 500 may be coupled to the pocket-milled part 410.

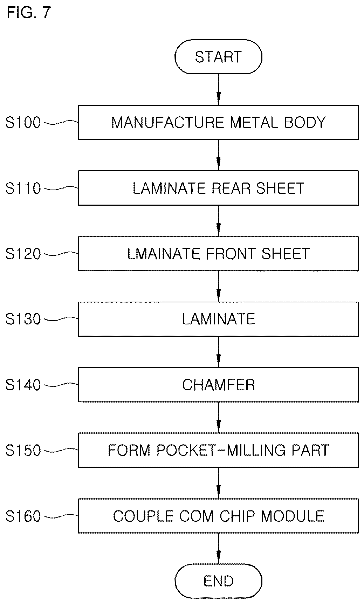

FIG. 7 is a flowchart illustrating a method for manufacturing a contactless-type metal card according to an embodiment of the present disclosure.

As illustrated in FIG. 7, there may be provided a method for manufacturing a contactless-type metal card, in which, in order to implement the RF capability by applying the COM chip module 500, the contactless-type metal card includes: the antenna 100 transmitting/receiving information to/from the outside; the metal body 200 providing the space, the opening part 230, and the slit part 240, the space being for receiving the antenna 100, the opening part 230 being insert molding-processed using the synthetic resin so as to receive a portion of the COM chip module 500, and the slit part 240 being formed starting from the opening part 230 and up to an end of the metal card; the rear sheet 300 manufactured into the shape corresponding to the metal body 200 so as to be lamination-coupled to the rear surface of the metal body 200; and the front sheet 400 corresponding to the rear sheet 300 and lamination-coupled to the front surface of the metal body 200, the metal body 200, the rear sheet 300, and the front sheet 400 being each coupled by being laminated, and after chamfered, the pocket-milled part 410 being formed on the front sheet 400 so as to correspond to the shape of the COM chip module 500, and the COM chip module 500 being coupled to the pocket-milled part 410, the metal body 200 includes: the body frame 210 forming an appearance; a milling part 220 formed on a portion of the body frame 210 to receive the antenna 100; and an opening part 230 insert molding-processed with synthetic resin or filled with a prosthesis made of synthetic resin so that a portion of the COM chip module 500 is coupled to a portion of the milling part 220, in which the slit part 240 is formed up to the end of the body frame 210 through the opening part 230 and the milling part 220, and the pocket-milled part 410 is included in the opening part 230 and formed to correspond to a shape of a portion of the COM chip module 500 so that the pocket-milled part 410 is coupled to the COM chip module 500, the method may include: a step (S100) of manufacturing a metal body; a step (S110) of laminating the rear sheet; a step (S120) of laminating the front sheet; a laminating step (S130); a chamfering step (S140); a step (S150) of forming the pocket-milled part; and a step (S160) of coupling the COM chip module.

The step (S100) of manufacturing the metal body is a step of manufacturing a metal body 200 of the set shape.

The step (S110) of laminating the rear sheet is a step of laminating the rear sheet 300 on the rear surface of the metal body 200 after the step (S100) of manufacturing the metal body.

The step (S120) of laminating the front sheet is a step of laminating the front sheet 400 on the front surface of the metal body 200 after the step (S110) of laminating the rear sheet.

The laminating step (S130) is a step of laminating the metal body 200 on which the rear sheet 300 and the front sheet 400 are laminated after the step (S120) of laminating the front sheet.

More specifically, the laminating step (S130) includes forming an adhesive layer between the front sheet 400 and the metal body 200 and between the rear sheet 300 and the metal body 200, in which the adhesive layer is formed by using a fabric that has previously adhered to the front sheet 400 and the rear sheet 300, or formed on the entire rear surface of the metal body 200 using an acrylic adhesive, a hot melt tape, etc., stacking the front sheet 400 and the rear sheet 300, and then laminating the front sheet 400 and the rear sheet 300 using hot press equipment.

The chamfering step (S140) is a step of chamfering the metal card 10 after the laminating step (S130). Specifically, the chamfering step (S140) may chamfer a side surface portion of the laminated metal card after the laminating step (S130). The chamfering is mainly performed on the surface of various materials such as metal, plastic, and wood to produce the accurate size, shape, and surface finish, and may be mainly performed using a CNC machine. The CNC machine is controlled by a computer program and may produce components with a desired shape.

The step (S150) of forming the pocket-milled part is a step of forming the pocket-milled part 410 on a chamfered metal card 600 after undergoing the chamfering step (S140).

The step (S160) of coupling the COM chip module is a step of coupling the COM chip module 500 to correspond to the shape of the pocket-milled part 410 after undergoing the step (S150) of forming the pocket-milled part. That is, the process may be performed by pocket-milling the portion where the COM chip module 500 is seated to form the pocket-milled part 410, and finally assembling the COM chip module 500.

The step (S160) of coupling the COM chip module includes a step of forming an adhesive layer in advance on the lead frame part 520 of the COM chip module 500, in which the adhesive layer may mainly use a hot melt tape.

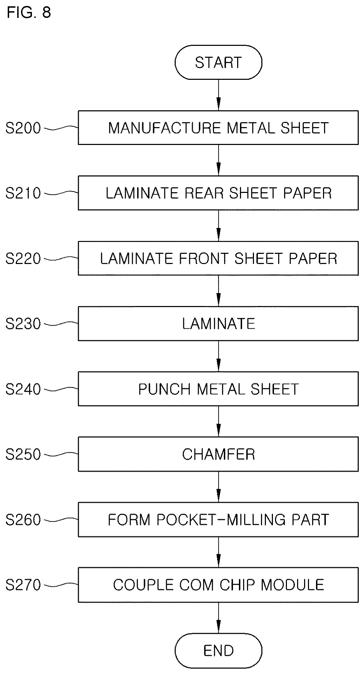

FIG. 8 is a flowchart illustrating the method for mass-producing a contactless-type metal card according to an embodiment of the present disclosure.

As illustrated in FIG. 8, the present disclosure may be performed by including a step (S200) of manufacturing the metal sheet, a step (S210) of laminating the rear sheet paper, a step (S220) of laminating the front sheet paper, a laminating step (S230), a step (S240) of punching the metal sheet, a chamfering step (S250), a step (S260) of forming the pocket-milled part, and a step (S270) of coupling the COM chip module.

The step (S200) of manufacturing the metal sheet is a step of manufacturing a metal sheet 202 in which the metal body 200 is formed in plurality.

The step (S210) of laminating the rear sheet paper is a step of, after undergoing the step (S200) of manufacturing the metal sheet, manufacturing the rear sheet paper 302 corresponding to the metal sheet 202 and laminating the rear sheet paper 302 on the rear surface of the metal sheet 202.

The step (S220) of laminating the front sheet paper is a step of, after undergoing the step (S210) of laminating the rear sheet paper, manufacturing the front sheet paper 402 corresponding to the rear sheet paper 302 and laminating the front sheet paper 402 on the front surface of the metal sheet 202.

The laminating step (S230) is a step of, after undergoing the step (S220) of laminating the front sheet paper, laminating the metal sheet 202 on which the rear sheet paper 302 and the front sheet paper 402 are laminated.

More specifically, in the laminating step (S230), the adhesive layer is formed between the front sheet paper 402 and the metal sheet 202 and between the rear sheet paper 302 and the metal sheet 202, and the laminating step is a step of forming the adhesive layer by using a fabric that has previously adhered to the front sheet and the rear sheet, or forming the adhesive layer on the front and rear surfaces of the metal sheet 202 using the acrylic adhesive, the hot melt tape, etc., stacking the front sheet paper 402 and the rear sheet paper 302, and then laminating the front sheet paper 402 and the rear sheet paper 302 using the hot press equipment.

The step (S240) of punching the metal sheet is a step for separating the metal sheet 202 by punching the metal sheet 202 into individual sheets after undergoing the laminating step (S230).

The chamfering step (S250) is a step for chamfering the metal card 10 after undergoing the step (S240) of punching the metal sheet.

The step (S250) of forming the pocket-milled part is a step of forming the pocket-milled part 410 on the chamfered metal card 600 after undergoing the chamfering step (S250).

The step (S270) of coupling the COM chip module is a step of coupling the COM chip module 500 to correspond to the shape of the pocket-milled part 410 after undergoing the step (S260) of forming the pocket-milled part.

The step (S270) of coupling the COM chip module includes a step of forming the adhesive layer in advance on the lead frame part 520 of the COM chip module 500, in which the adhesive layer may mainly use the hot melt tape.

The following is a specific description of the components as described above in the invention of the contactless-type metal card.

According to an embodiment of the present disclosure, since the COM chip 30 is assembled in the final process after laminating the metal body 200, the rear sheet 300, and the front sheet 400, it is possible to completely eliminate the possibility of chip damage during the process.

In addition, since it is the contactless method without the physical contact between the antenna 100 and the COM chip 30, it is possible to fundamentally block the possibility of progressive RF defects.

In addition, since the entire area of the COM chip 30 adheres to the insert molding part, it is possible to dramatically improve the possibility of separating the COM chip 30 due to the external stress.

In addition, since the pocket milling is performed using the existing plastic contact card equipment, there is no need to invest in separate additional equipment, so it is possible to save the time and cost.

As described above, the detailed description of the preferred embodiments of the present disclosure disclosed has been provided so that those skilled in the art may implement and practice the present disclosure. Although exemplary embodiments of the present disclosure have been disclosed above, it may be understood by those skilled in the art that the present disclosure may be variously modified and changed without departing from the scope of the present disclosure. For example, those skilled in the art may utilize the configurations described in the above-described embodiments in a manner that combines them. Accordingly, the present disclosure is not intended to be limited to the embodiments set forth herein, but is intended to have the widest scope consistent with the principles and novel features disclosed herein.

The present disclosure may be embodied in another specific form without departing from the spirit and the essential feature of the present disclosure. Therefore, the above-mentioned detailed description is to be interpreted as being illustrative rather than being restrictive in all aspects. The scope of the present disclosure is to be determined by reasonable interpretation of the claims, and all modifications within an equivalent range of the present disclosure fall in the scope of the present disclosure. The present disclosure is not intended to be limited to the embodiments set forth herein, but is intended to have the widest scope consistent with the principles and novel features disclosed herein. In addition, claims that do not have an explicitly referred relationship in the claims may be combined with each other to configure an embodiment or be included in new claims by amendment after application.

### [Description of Reference Signs]

100: Antenna
110: Capacitance pattern part
120: Primary coil part
130: Secondary coil part
140: Upper pattern
150: Lower pattern
200: Metal body
202: Metal sheet
210: Body frame
220: Milling part
230: Opening part
240: Slit part
300: Rear sheet
302: Rear sheet paper
400: Front sheet
402: Front sheet paper
410: Pocket-milled part
500: COM chip module
510: Chip molding part
520: Lead frame part
600: Chamfered metal card

### [Industrial Applicability]

The method for manufacturing a contactless-type metal card according to an embodiment of the present disclosure includes laminating the metal body, the rear sheet, and the front sheet, and then assembling the COM chip in the final process, thereby completely eliminating the possibility of chip breakage during the process, and thus the present disclosure has industrial applicability.

## Claims

1. A metal card for implementing RF capability by applying a COM chip module, comprising:
an antenna transmitting/receiving information to/from an outside;
a metal body providing a space, an opening part, and a slit part, the space being for receiving the antenna, the opening part being insert molding-processed using a synthetic resin so as to receive a portion of the COM chip module, and the slit part being formed starting from the opening part and up to an end of the metal card;
a rear sheet manufactured into a shape corresponding to the metal body so as to be lamination-coupled to a rear surface of the metal body; and
a front sheet corresponding to the rear sheet and lamination-coupled to a front surface of the metal body,
wherein the metal body, the rear sheet, and the front sheet are each coupled by being laminated, and after chamfered, a pocket-milled part is formed on the front sheet so as to correspond to a shape of the COM chip module, and
the COM chip module is coupled to the pocket-milled part.

2. The metal card of claim 1, wherein the metal body includes:
a body frame forming an appearance;
a milling part formed on a portion of the body frame to receive the antenna; and
an opening part insert molding-processed with synthetic resin or filled with a prosthesis made of synthetic resin so that a portion of the COM chip module is coupled to a portion of the milling part, and,
the slit part is formed up to the end of the body frame through the opening part and the milling part.

3. The metal card of claim 2, wherein the pocket-milled part is included in the opening part and formed to correspond to a shape of a portion of the COM chip module so that the pocket-milled part is coupled to the COM chip module.

4. The metal card of claim 3, wherein the COM chip module includes:
a chip molding part where the COM chip is molded and coupled; and
a lead frame part coupled to the pocket-milled part of the front sheet and the opening part while supporting the chip molding part from below.

5. The metal card of claim 4, wherein the pocket-milled part is included in the front sheet and formed to correspond to a lead frame part and a chip molding part of the COM chip module so that the pocket-milled part is coupled to the COM chip module.

6. The metal card of claim 1, wherein the antenna includes:
a primary coil part primarily receiving current through magnetic induction with the COM chip module;
a secondary coil part extending from the primary coil to form a closed-loop coil pattern; and
a capacitance pattern part configured with an upper pattern and a lower pattern that are configured in parallel at both ends of the primary coil part and the secondary coil part.

7. The metal card of claim 1, wherein the rear sheet is laminated with a rear printing sheet, an overlay film, and an MS tape film layer.

8. The metal card of claim 1, wherein the front sheet is laminated with a front printing sheet and an overlay film layer.

9. The metal card of any one of claims 1 to 8, further comprising:
a metal sheet in which the metal body is formed in plurality;
a rear sheet paper manufactured into the shape corresponding to the metal sheet so as to be lamination-coupled to a rear surface of the metal sheet; and
a front sheet paper corresponding to the rear sheet paper and lamination-coupled to the front surface of the metal sheet,
wherein the metal sheet is punched and separated into individual metal bodies, and
the pocket-milled part is formed in the metal body, and the COM chip module is coupled to the pocket-milled part.

10. A method for manufacturing a contactless-type metal card, wherein, in order to implement RF capability by applying the COM chip module of any one of claims 1 to 9, the contactless-type metal card includes: an antenna transmitting/receiving information to/from an outside; a metal body providing a space, an opening part, and a slit part, the space being for receiving the antenna, the opening part being insert molding-processed using a synthetic resin so as to receive a portion of the COM chip module, and the slit part being formed starting from the opening part and up to an end of the metal card; a rear sheet manufactured into a shape corresponding to the metal body so as to be lamination-coupled to a rear surface of the metal body; and a front sheet corresponding to the rear sheet and lamination-coupled to a front surface of the metal body, the metal body, the rear sheet, and the front sheet being each coupled by being laminated, and after chamfered, a pocket-milled part being formed on the front sheet so as to correspond to a shape of the COM chip module, and the COM chip module being coupled to the pocket-milled part, and the metal body includes: a body frame forming an appearance; a milling part formed on a portion of the body frame to receive the antenna; and an opening part insert molding-processed with synthetic resin or filled with a prosthesis made of synthetic resin so that a portion of the COM chip module is coupled to a portion of the milling part, in which the slit part is formed up to the end of the body frame through the opening part and the milling part, and the pocket-milled part is included in the opening part and formed to correspond to a shape of a portion of the COM chip module so that the pocket-milled part is coupled to the COM chip module, the method comprising:
manufacturing a metal body;
laminating the rear sheet on the rear surface of the metal body after manufacturing the metal body;
laminating the front sheet on the front surface of the metal body after laminating the rear sheet;
laminating the metal body on which the rear sheet and the front sheet are laminated after laminating the front sheet;
chamfering the metal card after the laminating;
forming the pocket-milled part on the metal card after undergoing the chamfering; and
coupling the COM chip module corresponding to the pocket-milled part after forming the pocket-milled part.

11. The method of claim 9, further comprising:
manufacturing a metal sheet in which the metal body is formed in plurality;
manufacturing a rear sheet paper corresponding to the metal sheet after manufacturing the metal sheet and laminating the rear sheet paper on the rear surface of the metal sheet;
manufacturing a front sheet paper corresponding to the rear sheet paper after laminating the rear sheet paper and laminating the front sheet paper on the front surface of the metal sheet;
laminating the metal sheet on which the rear sheet paper and the front sheet paper are laminated after laminating the front sheet paper;
separating the metal sheet by punching the metal sheet into individual sheets after undergoing the laminating;
chamfering the metal card after punching the metal sheet;
forming the pocket-milled part on the metal card after undergoing the chamfering; and
coupling the COM chip module corresponding to the pocket-milled part after forming the pocket-milled part.
